Europäisches Patentamt

**European Patent Office**

Office européen des brevets

(11) Numéro de publication : **0 018 314**
**B1**

(12) **FASCICULE DE BREVET EUROPÉEN**

(45) Date de publication du fascicule du brevet :
09.06.82

(51) Int. Cl.³ : **A 01 M 17/00, A 01 B 17/00**

(21) Numéro de dépôt : **80810015.0**

(22) Date de dépôt : **21.01.80**

(54) **Dispositif pour créer dans le sol une galerie tout en y introduisant des appâts toxiques pour combattre les rongeurs souterrains.**

(30) Priorité : **28.03.79 CH 2855/79**

(43) Date de publication de la demande :
**29.10.80 (Bulletin 80/22)**

(45) Mention de la délivrance du brevet :
**09.06.82 Bulletin 82/23**

(84) Etats contractants désignés :
**AT BE DE FR GB IT LU NL SE**

(56) Documents cités :
**DE A 2 752 646**
**DE U 6 900 899**
**DE U 7 420 796**

(73) Titulaire : **Société cantonale neuchâteloise d'agriculture et de viticulture**
**Case postale 48**
**CH-2072 St-Blaise (CH)**

(72) Inventeur : **Delley, Bernard, Dr.**
**Chemin Gabriel 12 b**
**CH-2034 Peseux (CH)**

(74) Mandataire : **Roueche, André**
**Gibraltar 8**
**CH-2000 Neuchâtel (CH)**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

Imprimerie Jouve, 18, rue St-Denis, 75001 Paris, France

**Dispositif pour créer dans le sol une galerie tout en y introduisant des appâts toxiques pour combattre les rongeurs souterrains**

Un burrow builder ou « faiseur de galeries dans le sol » est une machine agricole, attelée à un tracteur, qui permet de tracer dans le sol des prairies un sillon recouvert ou galerie artificielle, laquelle traverse le réseau de galeries naturelles construites par les rongeurs souterrains (par exemple le campagnol terrestre). Elle permet de déposer sur le plancher de la galerie artificielle des appâts toxiques sous forme de granulés pour lutter contre les rongeurs terricoles.

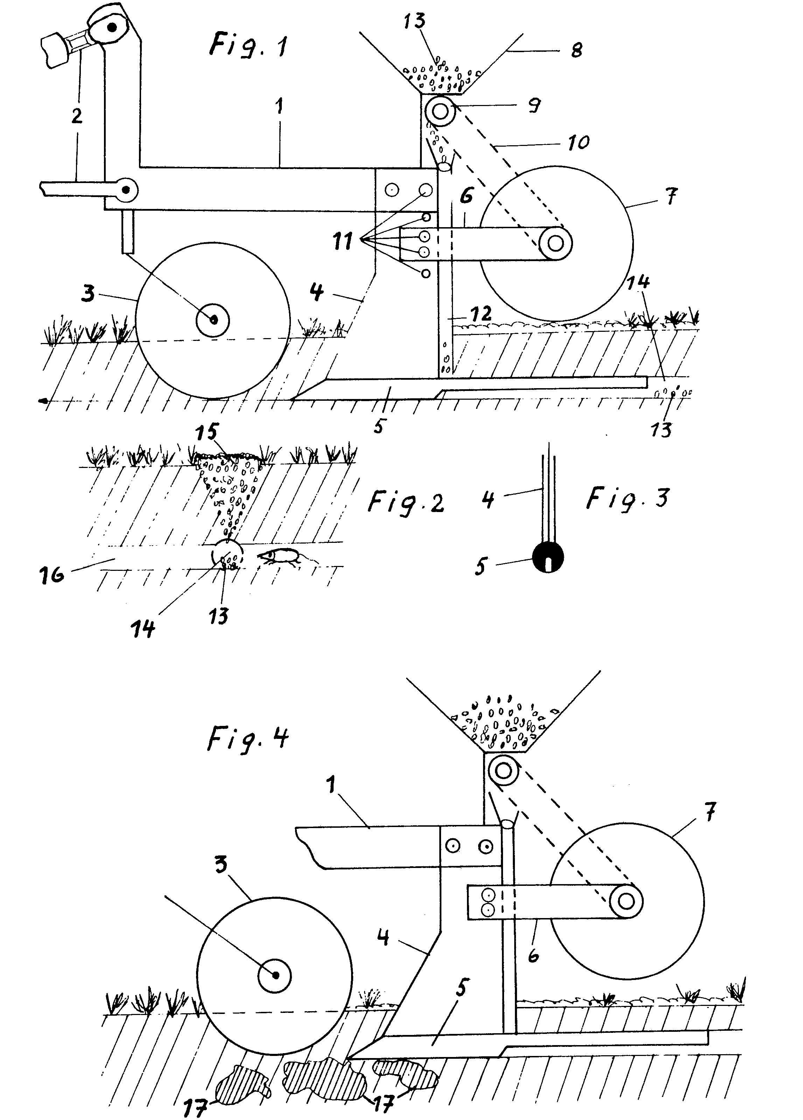

Les figures 1 à 4 des dessins ci-joints se rapportent au type de machine connu.

Cette machine comprend en général trois parties distinctes (voir fig. 1) :
1) le bâti 1 portant un disque fendeur 3,
2) le coutre 4 avec à sa base un tube profilé ou « fusée-taupe » 5,
3) le dispositif de distribution 8, 9, 10 des appâts toxiques 13 associé à une roue tasseuse-entraîneuse 7.

Dans les burrow builder conventionnels construits à ce jour, attelés au tracteur par l'intermédiaire du dispositif d'attache à trois points 2, les trois parties indiquées ci-dessus sont solidaires entre elles de manière fixe et rigide ; seul le disque fendeur 3 est monté sur un axe vertical permettant l'oscillation latérale du disque. Le coutre 4 porte à sa partie arrière une ligne verticale de trous 11 permettant de fixer à différents niveaux la roue arrière tasseuse-entraîneuse 7, déterminant par là la profondeur fixe du travail de la machine. Derrière le coutre se trouve un tube profilé 12 conduisant les appâts toxiques depuis le distributeur 9, entraîné par la chaîne 10, jusqu'à la partie creuse de la fusée-taupe 5, ces appâts tombant sur le plancher de la galerie artificielle 14. La figure 2 montre le résultat du passage de la fusée-taupe et la jonction de cette galerie 14 avec une galerie naturelle 16. 15 indique le toit de la galerie 14 fermé par la roue 7. La figure 3 montre en coupe la fusée-taupe 5 solidaire du coutre 4.

Cette machine permet de traiter sélectivement les prairies envahies de rongeurs sans pour autant exposer d'autres habitants du biotope (en particulier les oiseaux) à des toxiques qui ne leur sont pas destinés.

Les burrow builder conventionnels travaillent correctement lorsque le sol, à la profondeur de passage de la fusée-taupe, ne contient pas d'obstacles (fig. 1), telles que grosses pierres, voire encore de la roche affleurante. Cette profondeur se situe généralement entre 13 et 15 cm en dessous de la surface. Cette condition de sol n'est que rarement réalisée dans les terres de prairies du Jura et des Préalpes, comme en général dans les reliefs montagneux ; elle l'est plus facilement dans les zones de terres labourées régulièrement (terres assolées), soit en condition de plaine. Les burrow builder conventionnels sont mal adaptés aux conditions très changeantes des prairies d'altitude. Les obstacles grossiers 17 présents à la profondeur normale de travail de la fusée-taupe et du disque fendeur (fig. 4) soulèvent le burrow builder et condamnent la fonction de la roue tasseuse-entraîneuse 7. Il en résulte que la galerie artificielle est mal fermée, que les appâts toxiques ne sont plus distribués, que le traitement n'est dès lors que partiel et que son efficacité devient insuffisante. Les figures 1 et 4 donnent l'explication de ces défauts de comportement au sol des burrow builder conventionnels ; à cause des obstacles dans le sol, la fusée-taupe ne décrit pas dans l'espace une ligne parallèle à la surface du sol, mais une ligne sinusoïdale ; l'amplitude de cette sinusoïdale est transmise à tous les éléments reliés de manière fixe au coutre, ce qui détermine en particulier pour la roue tasseuse-entraîneuse la perte de contact avec le sol.

Dans cette condition de travail, le burrow builder laboure et maltraite le gazon, mais ne traite pas la prairie au sens propre du travail. La mauvaise qualité du traitement tient au fait que les terriers ou systèmes d'habitation des rongeurs visés ne sont pas ou que peu pourvus en appâts toxiques.

En analysant le comportement des burrow builder conventionnels dans les différentes conditions du sol, on a constaté que les variations d'amplitude de la sinusoïdale tracée par la fusée-taupe ne déterminent pas dans tous les cas l'incapacité de fabriquer une galerie artificielle satisfaisante ; c'est le système d'attache rigide de la roue tasseuse-entraîneuse, au coutre, qui détermine la perte de contact avec le sol de cette roue, d'où l'absence de fermeture du sillon et l'absence de dépôt des appâts toxiques. D'où aussi cette galerie de traitement discontinue.

La présente invention concerne un dispositif pour créer des galeries dans le sol en y introduisant des appâts toxiques, qui ne présente pas les inconvénients des burrow builder actuels et cela grâce à l'attache articulée du dispositif liant la roue tasseuse au coutre. Bien que travaillant, dans le principe général, comme les burrow builder conventionnels rigides, ce nouveau type s'en distingue par une particularité essentielle quant à la qualité du travail obtenu, résultant d'une meilleure adaptation aux différentes conditions du sol.

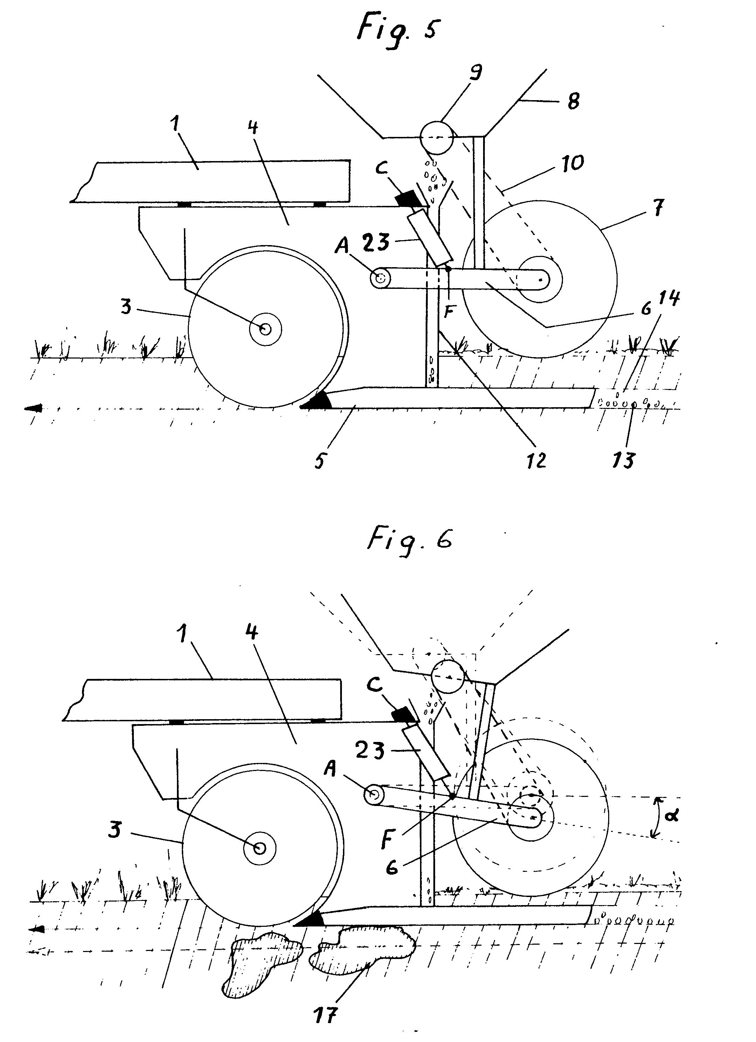

Les figures 5 et 6 des dessins annexés représentent schématiquement une forme d'exécution de l'objet de l'invention.

La figure 5 montre dans le principe la manière dont sont assemblées les parties constituantes du nouveau burrow builder ; le bâti 1 et le coutre 4, à disque fendeur encastré 3, sont liés entre eux de manière rigide, de même que la fusée-taupe 5 à la base du coutre. Par contre, le bras ou cadre 6, portant la roue tasseuse-entraîneuse ainsi que le dispositif de distribution des appâts toxiques 8, 9, 10 est rattaché au coutre par une double liaison. La partie avant du cadre est fixée au coutre par une articulation A ; un autre point F, situé en arrière de cette articulation A sur le cadre, est relié par un élément à longueur variable 23 à un autre point C du coutre ou bâti situé en dessus de l'articulation A. Le système de liaison ACF détermine un triangle variable. Le côté CF, variable, du triangle ACF constitue la partie essentielle de ce système d'attache : c'est un dispositif compensateur qui a une fonction de suspension-compression du cadre portant la roue tasseuse-entraîneuse 7.

La figure 5 montre la relation au sol du burrow builder dans les conditions normales de travail, c'est-à-dire lorsque la fusée-taupe est à la profondeur maximale désirée, cette dernière étant aussi déterminée par la position haute maximale de la roue tasseuse-entraîneuse (bras ou cadre 6 en position horizontale) ; cette position correspond à celle qu'aurait le burrow builder conventionnel. La figure 6 montre la relation au sol du burrow builder à compensateur en condition d'obstacles au sol, empêchant la fusée-taupe à suivre sa ligne de profondeur normale. En s'élevant au-dessus de l'obstacle 17 dans le sol, le disque 3 et la fusée-taupe poussent le coutre et tout ce qui lui est rattaché de manière fixe vers le haut ; grâce à l'articulation A et à la fonction du compensateur CF, la roue tasseuse-entraîneuse 7 est poussée vers le bas, presse la terre en dessus de la queue de la fusée-taupe, forme le toit de la galerie et continue d'entraîner le distributeur de granulés ou appâts toxiques. Le bras 6 liant l'articulation A et l'axe de la roue tasseuse détermine dans cette position basse de la roue, par rapport à la position qu'il aurait en système rigide (dessinée en pointillé), un angle α. Cet angle varie constamment lors du travail du burrow builder en fonction du sol ; lorsqu'il est maximum, le burrow builder est à la limite d'élévation par les obstacles du sol au-delà de laquelle il n'est plus possible de fabriquer une galerie artificielle satisfaisante, le contact de la roue tasseuse-entraîneuse 7 avec le sol étant interrompu ainsi que la distribution des appâts toxiques.

Cet arrêt de fonction du burrow builder intervient très tôt chez les burrow builder conventionnels. Dans le burrow builder à compensateur, cette situation ne se produit que lorsque l'angle α devient trop grand. Toutes les situations déterminant un angle α compris entre les valeurs α = 0 et α maximum sont maîtrisées par le système compensateur. Cela permet de tracer une galerie artificielle continue, dans des conditions non extrêmes de sol, là où les burrow builder conventionnels ne traceraient déjà plus que des segments de galeries artificielles (galeries continues). Une particularité du système de compensation est de permettre la valeur limite de l'angle α ; on peut donc changer les degrés de liberté de la roue tasseuse-entraîneuse 7, c'est-à-dire régler l'ampleur d'oscillation verticale de cette roue à l'intérieur de laquelle la galerie artificielle sera fabriquée de manière continue.

La dureté et la résistance du sol variant en fonction de sa constitution et son degré d'humidité, cela constitue un facteur de variation important du travail du compensateur ; il importe que le compensateur exerce une force variable et réglable. Un dispositif de réglage permet de corriger la pression exercée depuis le point fixe du coutre C sur le point mobile F du cadre de la roue tasseuse-entraîneuse 7. Le compensateur peut être un élément mécanique simple à tension variable ou encore un élément hydropneumatique à pression réglable.

Au lieu du système d'attache montré par la figure 5, on peut adopter un système à bascule, le compensateur étant alors placé en avant de l'articulation A, au-dessus ou dans le prolongement du bras porte-roue. La solution démontrée par la figure 5 est cependant la plus simple à construire. Le système d'attache peut éventuellement être non réglable.

## Revendications

1. Dispositif pour créer dans le sol une galerie tout en y introduisant des appâts toxiques pour combattre les rongeurs souterrains, destiné à être attaché à un tracteur et comprenant un bâti (1) portant un disque fendeur (3) placé devant un coutre (4) solidaire du bâti et portant à sa base une fusée-taupe (5), et une roue tasseuse-entraîneuse (7) placée derrière le coutre et associée à un dispositif de distribution (8, 9, 10) d'appâts granulés, caractérisé par le fait que la roue tasseuse-entraîneuse (7) est portée par un bras ou cadre (6) relié au coutre par une articulation (A) afin que cette roue (7) puisse osciller dans le plan vertical et par le fait qu'une attache de type suspenseur-compresseur variable (23), dont une extrémité est reliée au coutre (4) et l'autre articulée sur le bras (6), a pour effet de maintenir la roue tasseuse-entraîneuse (7) au contact du sol lorsque le disque fendeur (3) et le coutre (4) sont soulevés par un obstacle souterrain (17) et, de ce fait, d'assurer la formation du toit (15) de la galerie (14) et la distribution des appâts (13).

2. Dispositif selon la revendication 1, caractérisé par le fait que l'articulation (F) de l'attache (23) sur le bras (6) est située en arrière de l'articulation (A) du bras sur le coutre (4).

3. Dispositif selon la revendication 1, caractérisé par le fait que l'articulation (F) de l'attache (23) sur le bras (6) est située en avant de l'articulation (A) du bras sur le coutre (4).

4. Dispositif selon la revendication 1, caractérisé par une attache (23) mécanique qui permet de régler l'ampleur de l'oscillation de la roue tasseuse-entraîneuse (7).

5. Dispositif selon la revendication 1, caractérisé par une attache (23) hydropneumatique qui permet de régler l'ampleur de l'oscillation de la roue tasseuse-entraîneuse (7).

## Claims

1. Device for forming a tunnel in the ground while depositing poisonous bait therein so as to combat subsoil rodents, which device is designed to be attached to a tractor and comprising a frame (1) carrying a cutting disc (3) positioned in front of a coulter (4) securely fastened to the frame and carrying at its base a tunnelling implement (5), and a tamping and drive wheel (7) arranged behind the coulter and connected with a distributing device (8, 9, 10) for granulated bait, characterised in that the tamping and drive wheel (7) is carried by an arm or framework (6) connected to the coulter by an articulation (A) so that this wheel (7) can oscillate in a vertical plane, and in that an attachment (23) of the variable suspension/compression type, one end of which is connected to the coulter (4) and the other is articulated on the arm (6), has the purpose of keeping the tamping and drive wheel (7) in contact with the ground when the cutter disc (3) and the coulter (4) are moved upwards by an underground obstacle (17) and, accordingly, of ensuring the formation of the roof (15) of the tunnel (14) and the distribution of the bait (13).

2. Device according to Claim 1, characterised in that the articulation (F) of the attachment (23) on the arm (6) is situated behind the articulation (A) of the arm on the coulter (4).

3. Device according to Claim 1, characterised in that the articulation (F) of the attachment (23) on the arm (6) is situated in front of the articulation (A) of the arm on the coulter (4).

4. Device according to Claim 1, characterised by a mechanical attachment (23) which makes it possible to regulate the amplitude of oscillation of the tamping and drive wheel (7).

5. Device according to Claim 1, characterised by a hydropneumatic attachment (23) which makes it possible to regulate the amplitude of oscillation of the tamping and drive wheel (7).


**Ansprüche**

1. Gerät zum Gangformen im Erdreich und Einbringen von Giftködern zur Bekämpfung von im Boden lebenden Nagetieren, das an einen Traktor anhängbar ist und einen Rahmen (1), der eine Trennscheibe (3) vor einem mit dem Rahmen formschlüssig verbundenen Kolter (4) trägt, welcher an seinem unteren Ende einen Maulwurfspflug (5) trägt, und ein Antriebs- und Verdichtungsrad (7) aufweist, das hinter dem Kolter angeordnet und mit einer Verteileinrichtung (8, 9, 10) für die granulierten Köder verbunden ist, dadurch gekennzeichnet, daß das Antriebs- und Verdichtungsrad (7) von einem Arm oder Rahmen (6) gehalten ist, der über ein Gelenk (A) mit dem Kolter verbunden ist, so daß dieses Rad (7) in der Vertikalebene schwenken kann, und daß eine Halterung (23) des Typs mit variabler Aufhängung und Druckkraft, dessen eines Ende mit dem Kolter (4) verbunden und das andere am Arm (6) angelenkt ist, bewirkt, daß das Antriebs- und Verdichtungsrad (7) mit dem Erdboden in Kontakt gehalten wird, wenn die Trennscheibe (3) und der Kolter (4) durch ein unterirdisches Hindernis (17) angehoben werden, um auf diese Weise die Bildung der Decke (15) des Ganges (14) und die Verteilung der Köder (13) zu gewährleisten.

2. Gerät nach Anspruch 1, dadurch gekennzeichnet, daß das Gelenk (F) der Halterung (23) am Arm (6) hinter dem Gelenk (A) des Armes am Kolter (4) angeordnet ist.

3. Gerät nach Anspruch 1, dadurch gekennzeichnet, daß das Gelenk (F) der Halterung (23) am Arm (6) vor dem Gelenk (A) des Armes am Kolter (4) angeordnet ist.

4. Gerät nach Anspruch 1 gekennzeichnet durch eine mechanische Halterung (23), die es gestattet, die Weite der Verschwenkung des Antriebs- und Verdichtungsrades (7) zu regeln.

5. Gerät nach Anspruch 1 gekennzeichnet durch eine hydropneumatische Halterung (23), die es gestattet, die Weite der Verschwenkung des Antriebs- und Verdichtungsrades (7) zu regeln.

0 018 314

Fig. 1

Fig. 2

Fig. 3

Fig. 4

## Fig. 5

## Fig. 6

2